# EUROPÄISCHE PATENTANMELDUNG

(11) **EP 0 887 169 A1**
(43) Veröffentlichungstag der Anmeldung: **30.12.1998**
(21) Anmeldenummer: 98810544.1
(22) Anmeldetag: 15.06.1998
(51) Int. Cl.: B29C 45/16

(54) **Verfahren zum Herstellen eines mehrschichtigen Vorformlings und nach dem Verfahren hergestellter Vorformling**

(30) Priorität: 27.06.1997 CH 1578/97
(71) Anmelder: Altoplast AG, 8754 Netstal (CH)
(72) Erfinder: Schöpf, Karl, 8758 Obstalden (CH); Diener, Norbert, 8758 Obstalden (CH); Schmidt, Wojciech, 8180 Bülach (CH)
(74) Vertreter: Groner, Manfred

(57) **Zusammenfassung**

Zum Herstellen eines mehrschichtigen und eine innere Sperrschicht (13a) aufweisenden Vorformlings (14) mittels einer Spritzgussvorrichtung (1) werden begrenzte Mengen aus einem ersten (10) und einem zweiten (11) Bestand gespritzt. Der zweite Bestand besteht aus einem Sperrschichtmaterial (13).

In einer Vorphase wird Material (12) aus dem ersten Bestand (10) in den Formhohlraum (5) bis zu einer Teilfüllung gespritzt, und in einer Hauptphase wird parallel und koaxial eine begrenzte Menge aus dem ersten Bestand (10) und aus einem zweiten Bestand (11) in den Hohlraum (5) eingespritzt.

## Beschreibung

Die Erfindung betrifft ein Verfahren zum Herstellen eines mehrschichtigen und eine innere Sperrschicht aufweisenden Vorformlings mittels einer Spritzgussvorrichtung nach dem Oberbegriff des Patentanspruchs 1. Die Erfindung betrifft zudem einen nach dem Verfahren hergestellten Vorformling.

Verfahren dieser Art sind bekannt und dienen zum Herstellen von Behältern und insbesondere Trinkflaschen, wobei die Vorformlinge in einer getemperten Glasform aufgeblasen werden. Ein solches Verfahren ist beispielsweise aus der EP-0 53 120 bekannt geworden. Bei diesem Verfahren werden im Vorformling Sperrschichten gebildet, die bei Behältern einen Gasdurchtritt von innen nach aussen verhindern sollen. Der thermoplastische Kunststoff zur Herstellung dieser Sperrschichten ist vergleichsweise teuer. Damit diese Sperrschichten eine geringe Gesamtdichte aufweisen, wird nach dem Spritzen des Sperrschichtmaterials ein weiterer Kunststoff eingespritzt, der einen höheren Schmelzpunkt aufweist als das Sperrschichtmaterial, und der zwischen zwei Schichten des Sperrschichtmaterials nach vorne in den Vorhohlraum drängt, um damit die Dicke der Sperrschichten zu verringern. Mit diesem Verfahren wird insbesondere ein fünfschichtiger Vorformling mit einer Kernschicht, zwei Sperrschichten und zwei äusseren Schichten gebildet. Es können jedoch auch Vorformlinge mit vier, sechs oder mehr Sperrschichten gebildet werden. Dadurch lässt sich jedoch immer nur eine gerade Anzahl von Sperrschichten bilden und somit ist ein Vorformling mit nur einer oder drei Sperrschichten grundsätzlich nicht möglich. Bei diesem Verfahren besteht zudem die Schwierigkeit, dass das Sperrschichtmaterial nicht selten an die Oberfläche des Vorformlings dringt, was zu einer Delamination führen kann. Da wie oben erwähnt das Sperrschichtmaterial vergleichsweise teuer ist, ist eine Verminderung des Verbrauchs an Sperrschichtmaterial zur Kosteneinsparung gewünscht.

Der Erfindung liegt die Aufgabe zugrunde, ein Verfahren der genannten Art zu schaffen, das die oben genannten Nachteile wenigstens teilweise vermeidet.

Die Aufgabe ist bei einem gattungsgemässen Verfahren dadurch gelöst, dass in einer Vorphase Material aus dem ersten Bestand in die Form bis zu einer Teilfüllung eingespritzt wird und in einer Hauptphase parallel und koaxial begrenzte Mengen aus dem ersten Bestand und aus dem zweiten Bestand eingespritzt werden. Beim erfindungsgemässen Verfahren erfolgt das Einbringen des Sperrschichtmaterials in einem Parallelprozess. Hierbei ist das Sperrschichtmaterial während dem Einspritzvorgang von einer Schicht und vom Material aus dem ersten Bestand umgeben. Das Sperrschichtmaterial fliesst einschichtig zusammen mit dem anderen Material nach vorne in den Hohlraum der Spritzgussform. Nach einer Weiterbildung der Erfindung wird in einer Schlussphase eine weitere begrenzte Menge aus dem ersten Bestand in die Form eingespritzt, wobei das Sperrschichtmaterial als innere Schicht unter Verminderung seiner Schichtdicke im wesentlichen bis zu einem Verschlussteil des Vorformlings vom Material aus dem zweiten Bestand mitgetragen wird. In dieser Schlussphase wird die Menge des Sperrschichtmaterials nicht vergrössert. Durch das Fliessen der Sperrschicht nach vorne im Hohlraum der Form wird die Sperrschicht gestreckt und damit deren Schichtdicke wesentlich verringert. Die endgültige Schichtdicke kann kleiner als 0,2 mm sein. In der Schlussphase wird somit lediglich noch eine begrenzte Menge aus dem ersten Bestand in die Form eingespritzt. Damit wird die Verbindung der Sperrschicht zur Oberfläche des Vorformlings unterbrochen. Die Sperrschicht ist damit vollständig vom Material aus dem zweiten Bestand umschlossen.

Denkbar ist auch eine Ausführung, bei der mehr als eine Sperrschicht gebildet wird. Diese mehreren Sperrschichten werden ebenfalls in einem Parallelprozess in die Form eingespritzt. Die dazu erforderliche Spritzgussdüse erhält dann entsprechend drei oder mehr Ausgänge. Im gebildeten Vorformling werden dann entsprechend parallel und im Abstand zueinander mehrere Sperrschichten angeordnet. Diese sind jeweils vollständig vom Material aus dem ersten Bestand umschlossen.

Mit dem erfindungsgemässen Verfahren könnnen somit auch Vorformlinge mit einer ungeraden Anzahl Sperrschichten und damit auch mit einer einzigen Sperrschicht gebildet werden. In einem Vorformling mit lediglich einer Sperrschicht ist der Verbrauch an dem vergleichsweise teuren Sperrschichtmaterial geringer als nach dem Stand der Technik. Damit könnnen die Herstellungskosten wesentlich gesenkt werden. Soll eine höhere Sperrwirkung erzielt werden, so ist jede höhere Anzahl Sperrschichten ohne weiteres möglich. Wesentlich ist zudem, dass beim Paralleleinspritzen nach dem erfindungsgemässen Verfahren die Sperrschichten zuverlässiger als bisher so gebildet werden können, dass kein Sperrmaterial an die Oberfläche dringt. Die Bildung nicht verwendbarer Vorformlinge infolge von Delamination kann damit weitgehend vermieden werden.

Nachfolgend wird das erfindungsgemässe Verfahren sowie ein damit gebildeter Vorformling anhand der Zeichnung näher erläutert. Es zeigen:
Figur 1 schematisch einen Querschnitt durch einen Teil einer Spritzgussvorrichtung,
Figur 2 schematisch eine Vorphase des erfindungsgemässen Verfahrens,
Figur 3 schematisch die Hauptphase des erfindungsgemässen Verfahrens,
Figur 4 schematisch die Schlussphase des erfindungsgemässen Verfahrens, und
Figur 5 einen Längsschnitt durch einen nach dem erfingungsgemässen Verfahren hergestellten Vorformling.

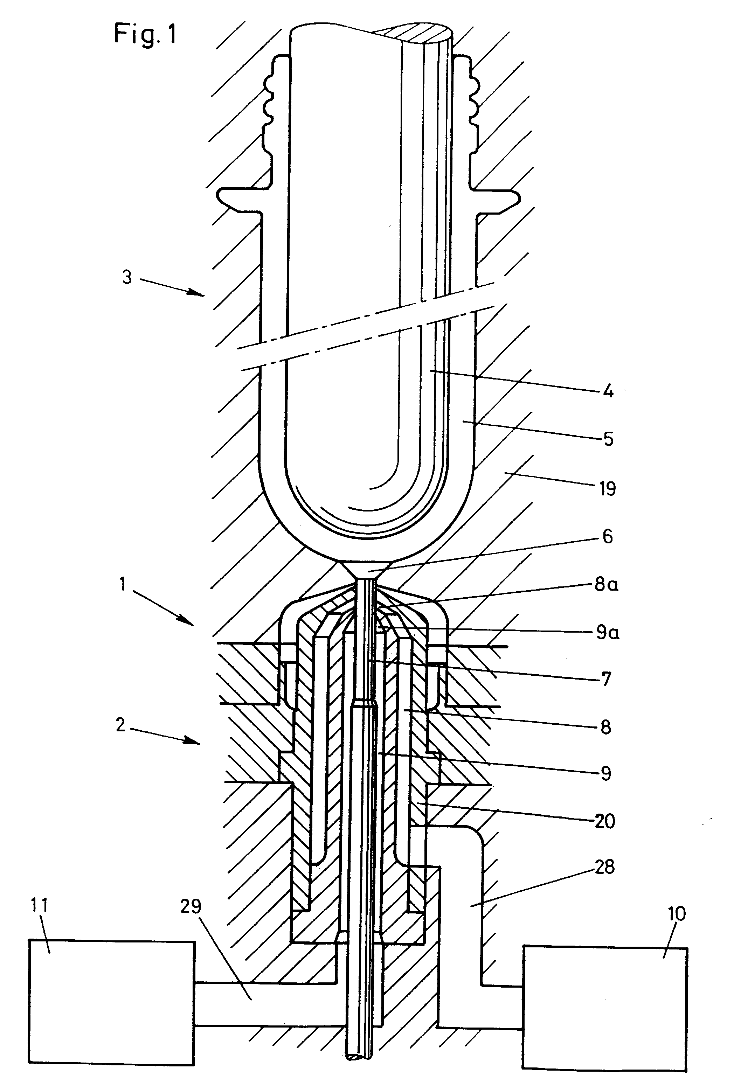

Die Figur 1 zeigt eine Spritzgussvorrichtung 1 mit einer Spritzgussdüse 2 und einer Spritzgussform 3. Die hier nur abschnittsweise gezeigte Spritzgussform weist einen hülsenförmigen Hohlraum 5 auf, der durch einen Kern 4 und einen Körper 19 der Spritzgussform 3 gebildet wird. Der Hohlraum 5 entspricht der Form des in Figur 5 gezeigten Vorformlings 14.

Die Spritzgussdüse 2 ist so ausgebildet, dass aus einem ersten Behälter 10 sowie einem zweiten Behälter 11 in einem Parallelprozess gleichzeitig durch eine Öffnung 6 zwei unterschiedliche thermoplastische Kunststoffe in den Hohlraum 5 eingespritzt werden können. Dazu weist die Spritzgussdüse 2 in einem Düsenkörper 20 einen ersten Kanal 8 auf, der mit dem Behälter 10 verbunden ist und der koaxial einen weiteren Kanal 9 umgibt, welcher mit dem Behälter 11 verbunden ist. Ein Durchgang 28 verbindet den zylindrischen Kanal 8 mit dem Behälter 10 und ein Durchgang 29 den inneren Kanal 9 mit dem Behälter 11. Der Kanal 9 besitzt eine vordere Mündung 9a, die in Fliessrichtung hinter einer Mündung 8b des Kanals 8 angeordnet ist. Ein längs verschiebbares Schliessorgan 7 ragt durch die Mündungen 8a und 9a und verschliess in der gezeigten Stellung die Öffnung 6. Das Schliessorgan 7 ist zur Freigabe der Öffnung 6 sowie der Mündungen 8a und 9a gesteuert zurückziehbar.

Das Material des ersten Bestandes 10 ist ein thermoplastischer Kunststoff, insbesondere PET. Der Behälter 11 enthält einen thermoplastischen Kunststoff, der zur Bildung einer Sperrschicht geeignet ist. Dieser Kunststoff kann beispielsweise PEN, Nylon oder EVOH sein. Die Materialien in den Behältern 10 und 11 können vertauscht werden.

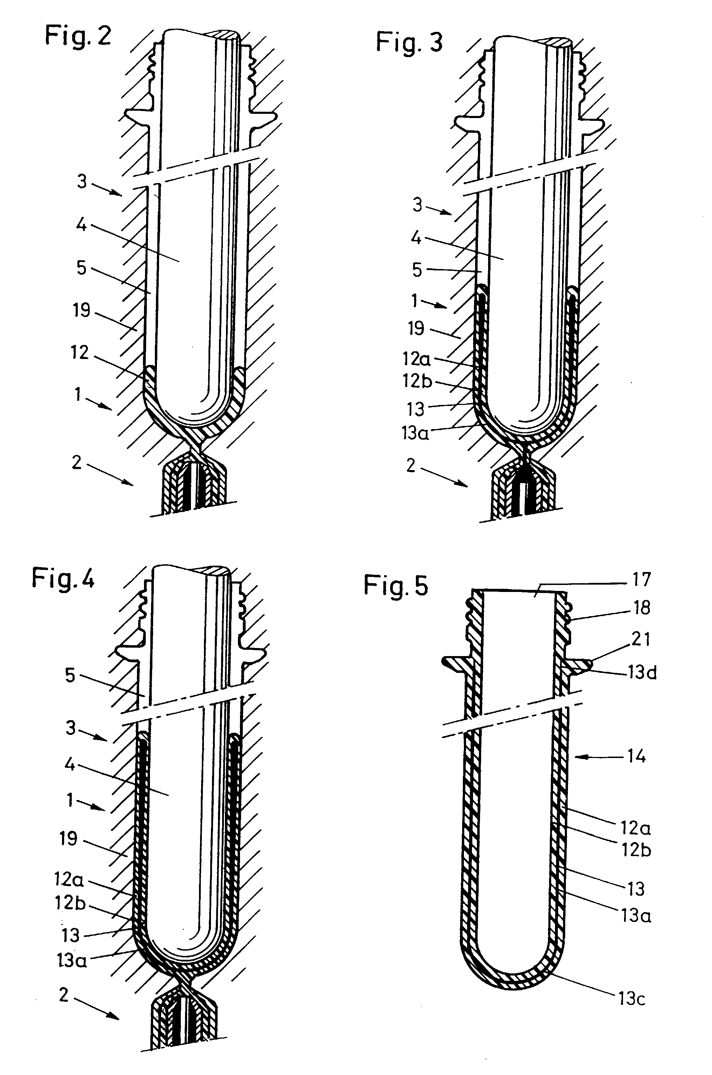

Zur Bildung des in Figur 5 gezeigten Vorformlings 14 wird in einem Vorverfahren gemäss Figur 2 Material 12 in begrenzter Menge durch den Kanal 8 in den Hohlraum 5 eingespritzt. Das Sperrorgan 7 ist hierbei in teilweise zurückgezogener Position. Wie die Figur 2 zeigt, wird hierbei vom Hohlraum 5 lediglich ein unterer Teil mit diesem Material 12 gefüllt.

In einer Hauptphase wird nun gemäss Figur 2 eine begrenzte Menge eines Sperrschichtmaterials 13 in den Hohlraum 5 eingespritzt. Das Einspritzen des Sperrschichtmaterials 13 erfolgt parallel mit dem Einspritzen einer weiteren Menge des Materials 12. Das Sperrorgan 7 ist gemäss Figur 3 soweit zurückgezogen, dass gleichzeitig der Kanal 8 als auch der Kanal 9 zum Hohlraum 5 hin offen sind. Am Ende dieser Hauptphase ist gemäss Figur 3 das eingespritze Material 13 im Hohlraum 5 nach aussen geführt.

In einer Schlussphase gemäss Figur 4 wird der Kanal 9 mit dem Sperrorgan 7 geschlossen und weiter Material 12 aus dem Behälter 10 in den Hohlraum 5 eingespritzt. Das Material 13 fliesst mit dem Material 12 im Hohlraum 5 nach vorne und wird hierbei im wesentlichen über die gesamte Länge des Hohlraums 5 verteilt. Da die Menge des Material 13 in dieser Schlussphase nicht vergrössert wird, wird entsprechend die Schichtdicke des Materials 13 wesentlich verkleinert. Die Schichtdicke des Materials 13 ist somit abhängig von der Menge des Materials, das in der Hauptphase aus dem Behälter 11 in den Hohlraum 5 eingespritzt wird. Die Verbindung des Materials 13 zur Öffnung 6 hin wird damit unterbrochen und das Material 13 ist schliesslich vollständig vom Material 12 umschlossen. Das Material 13 ist so bemessen, dass beim Vorformling gemäss Figur 5 sich dieses Material bis in den Bereich eines Flansches 21 erstreckt. In der Schlussphase gemäss Figur 4 wird der Hohlraum 5 vollständig mit dem Material 12 gefüllt. Mit Ausnahme einer in Figur 5 gezeigten Mündung 17, die ein Aussengewinde 18 aufweist, ist der Vorformling 14 fünfschichtig. Eine innere Schicht 12b und eine äussere Schicht 12a werden durch das Material 12 gebildet. Eine innere Schicht 13a, welche die Sperrschicht bildet, wird durch das Material 18 gebildet. Die Sperrschicht 13a besitzt gemäss Figur 5 somit einen Bodenteil 13c sowie einen auslaufenden oberen Bereich 13d. Der Bodenbereich 13c ist wie ersichtlich ebenfalls einschichtig und weist keine Verbindung zur Oberfläche des Vorformlings 14 auf.

Nach dem Entformen wird das Sperrorgan 7 wieder in die in Figur 1 gezeigte Stellung gebracht und damit ist die Spritzgussvorrichtung 1 für die Bildung eines weiteren Vorformlings 14 bereit. Die Spritzgussdüse 2 kann auch so ausgebildet sein, dass mehr als eine Sperrschicht 13a gebildet wird. Zur Bildung von zwei Sperrschichten 13a weist dann die Düse 2 einen dritten, hier nicht gezeigten Kanal auf. In der Hauptphase gemäss Figur 3 wird dann parallel und koaxial aus drei Düsen Material eingespritzt. Aus zwei koaxialen Innenkanälen werden dann entsprechend zwei Sperrschichten 13 gebildet. Denkbar ist auch ein Verfahren, bei dem mehr als zwei Sperrschichten gebildet werden. Wesentlich ist jeweils das parallele Einspritzen unterschiedlicher Materialien in der Hauptphase.

## Patentansprüche

1. Verfahren zum Herstellen eines mehrschichtigen und eine innere Sperrschicht (13a) aufweisenden Vorformlings (14) mittels einer Spritzgussvorrichtung (1), mit den folgenden Verfahrensschritten:
- Bereitstellen einer Spritzgussform (3) mit einem Kern (4) und einem den Kern (4) umgebenden Hohlraum (5), sowie einer Spritzgussdüse (2),
- Bereitstellen eines ersten Bestandes (10) an thermoplastischem Material (12) zum Bilden einer äusseren Schicht des Vorformlings (14),
- Bereitstellen eines zweiten Bestandes (11) eines Sperrschichtmaterials (13),
- Spritzen von begrenzten Mengen aus dem ersten (10) und dem zweiten (11) Bestand,
dadurch gekennzeichnet, dass
- in einer Vorphase Material (12) aus dem ersten Bestand (10) in den Hohlraum (5) bis zu einer Teilfüllung gespritzt wird,
- und in einer Hauptphase parallel und koaxial begrenzte Mengen aus dem ersten Bestand (10) und aus dem zweiten Bestand (11) in den Hohlraum (5) eingespritzt werden.

2. Verfahren nach Anspruch 1, dadurch gekennzeichnet, dass in einer Schlussphase eine begrenzte Menge aus dem ersten Bestand (10) in den Hohlraum (5) eingespritzt wird, wobei das Sperrschichtmaterial (13) als innere Schicht (13a) unter Verminderung seiner Schichtdicke im wesentlichen bis zu einem Mündungsbereich (17) vom Material (12) aus dem ersten Bestand (10) mitgetragen wird.

3. Verfahren nach Anspruch 1 oder 2, dadurch gekennzeichnet, dass das Material aus dem ersten Bestand (10) PET ist.

4. Verfahren nach Anspruch 1 oder 2, dadurch gekennzeichnet, dass das Material aus dem zweiten Bestand (11) PEN, im wesentlichen reines PEN oder ein Polyamid ist.

5. Vorformling hergestellt nach dem Verfahren gemäss Anspruch 1, dadurch gekennzeichent, dass er in seinem Rumpfbereich dreischichtig ist und eine innere Sperrschicht (13a) aufweist, die vollständig von einem weiteren Material umgeben ist.

6. Vorformling nach Anspruch 5, dadurch gekennzeichnet, dass die Sperrschicht (13a) PEN oder ein Polyamid ist.
